# EUROPÄISCHE PATENTSCHRIFT

(11) **EP 1 916 177 B1**
(45) Veröffentlichungstag und Bekanntmachung des Hinweises auf die Patenterteilung: **21.08.2013**
(21) Anmeldenummer: 07020391.4
(22) Anmeldetag: 18.10.2007
(51) Int. Cl.: B62D 15/02

(54) **Verfahren zur Steuerung eines Fahrmanövers**
Method for controlling a driving manoeuvre
Procédé destiné à la commande d'une manoeuvre de conduite

(30) Priorität: 26.10.2006 DE 102006050550
(43) Veröffentlichungstag der Anmeldung: 30.04.2008
(73) Patentinhaber: Bayerische Motoren Werke Aktiengesellschaft, 80809 München (DE)
(72) Erfinder: Augst, Alexander, 80937 München (DE)

(56) Entgegenhaltungen:
- WO-A1-2005/102823
- US-A- 5 406 395
- US-A1- 2006 202 984

## Beschreibung

Die Erfindung betrifft ein Verfahren zur Steuerung eines zumindest teilautomatisch durchführbaren Fahrmanövers, durch welches ein Kraftfahrzeug von einer Istposition in eine Sollposition verbringbar ist.

Ein solches Verfahren wird in der deutschen Patentanmeldung der Anmelderin mit dem Aktenzeichen 102006026092.9 beschrieben.

Die WO 2005/102823 A1 offenbart ein Verfahren, bei dem in Abhängigkeit von Bedienaktionen eines Bedieners eines Kraftfahrzeugs eine Zielposition eines Parkmanövers verändert und ein die Zielposition anzeigendes Zielobjekt auf einer die Umgebung des Kraftfahrzeugs darstellenden Anzeige verschoben wird.

Die US 5,406,395 offenbart ein Einparkhilfssystem, bei welchem ein mit Projektionsmitteln ausgestattetes Kraftfahrzeug Anwendung findet.

Aufgabe der vorliegenden Erfindung ist es, ein solches Verfahren vorteilhaft weiterzuentwickeln bzw. abzuwandeln.

Gelöst wird diese Aufgabe durch ein Verfahren mit den Merkmalen des Anspruchs 1. Vorteilhafte Ausführungsformen und Weiterbildungen der vorliegenden Erfindung ergeben sich aus den abhängigen Ansprüchen.

Ein wesentlicher Unterschied der Erfindung zur Offenbarung der 102006026092.9 besteht darin, dass das virtuelle Zielobjekt nicht bzw. nicht ausschließlich auf einer Anzeigeeinheit im Kraftfahrzeuginneren angezeigt wird. Stattdessen bzw. zusätzlich wird das virtuelle Zielobjekt erfindungsgemäß durch an dem Kraftfahrzeug vorgesehene Projektionsmittel als Projektionsobjekt unmittelbar an der Zielposition in der Umgebung des Kraftfahrzeugs erzeugt. Die Projektionsstelle, an der das virtuelle Zielobjekt erzeugt wird, liegt also außerhalb des Kraftfahrzeugs. Das virtuelle Zielobjekt wird als Lichterscheinung dort erzeugt, wo es vom Fahrer wahrgenommen werden soll.

Die Formulierung "virtuelles Zielobjekt" soll ausdrücken, dass es sich nicht um ein Objekt im Sinne eines festen Körpers handelt, sondern lediglich um eine Lichterscheinung. Der Einfachheit halber wird im Folgenden lediglich von einem Zielobjekt gesprochen. Dabei ist jedoch stets ein Zielobjekt mit solchem virtuellem Charakter gemeint.

Als Zielposition im Sinne der Erfindung ist vorzugsweise eine avisierte Endposition eines Fahrmanövers zu verstehen. Beispielsweise kann die Zielposition ein avisierter Parkplatz sein. Die vorliegende Erfindung umfasst selbstverständlich auch den Fall, dass es sich bei der Zielposition um eine avisierte Zwischenposition eines Fahrmanövers handelt. Dieser Fall kann jedoch betrachtet werden als Verkettung mehrerer Fahrmanöver, von denen eines an der Zielposition endet. Die Zielposition kann somit - einfacherweise - weiter als avisierte Endposition eines Fahrmanövers betrachtet werden.

Die erfindungsgemäße Art der Darstellung des Zielobjekts bietet eine in vielen Fällen vorteilhafte Alternative zu anderen Anzeigeformen, etwa zur Projektion auf die Windschutzscheibe bei einem so genannten Head-Up-Display (HUD).

Zum einen kann eine Projektion an einer Projektionsstelle außerhalb eines Kraftfahrzeugs so gestaltet werden, dass sie auch für andere Verkehrsteilnehmer sichtbar ist. Somit können die anderen Verkehrsteilnehmer über ein bevorstehendes Park-, Rangier- oder Wendemanöver und einen eventuellen Platzbedarf des projizierenden Kraftfahrzeugs informiert werden Im Falle der Anwendung der Erfindung bei einem Parkmanöver kann der beabsichtigte Parkplatz auch durch das erzeugte Projektionsobjekt für andere Verkehrsteilnehmer erkennbar reserviert werden.

Ein weiterer Vorteil der erfindungsgemäßen Erzeugung des Zielobjekts als Projektionsobjekt unmittelbar an der Zielposition besteht gegenüber anderen Anzeigeformen zum anderen darin, dass so unter Umständen in einfacherer und/oder verbesserter Art und Weise eine aus Sicht des Betrachters (bezogen auf Elemente der realen Fahrzeugumgebung) positionsrichtige bzw. positionsgenaue Darstellung realisiert werden kann. Dies wird durch die Erzeugung von Projektionsobjekten außerhalb des Kraftfahrzeugs in einfacherer bzw. verbesserter Art und Weise möglich, da die erfindungsgemäße Projektion nicht bzw. nicht in gleichem Maße wie etwa eine Projektion auf die Windschutzscheibe von der Augenposition und/oder dem Blickwinkel des Betrachters abhängt. Für die Realisierung der Erfindung sind somit in der Regel auch keine Mittel zur Erfassung der Augenposition und/oder des Blickwinkels des Betrachters erforderlich. Beispielsweise sind im Zusammenhang mit Night-Vision-Systemen und im Zusammenhang mit Vorrichtungen zur hervorgehobenen Anzeige von Verkehrszeichen Augmemtieruhgsverfahren bekannt, bei welchen für den Fahrer eines Kraftfahrzeugs ein außerhalb des Fahrzeugs befindliches Objekt optisch hervorgehoben wird, indem eine optische Information so auf die Windschutzscheibe des Kraftfahrzeugs projiziert wird, dass sie sich für den Fahrer des Kraftfahrzeugs als Pfeil auf das Objekt oder als Umrandung um das Objekt darstellt. Bewegt der Fahrer seinen Kopf jedoch zur Seite und wird diese Bewegung vom jeweiligen System nicht berücksichtigt, erscheint die projizierte Information aus Sicht des Fahrers nicht positionsrichtig im augmentierten Gesamtbild. Wird eine entsprechende optische Information (hier beispielsweise ein Pfeil oder ein Kreis bzw. bei entsprechender optischer Verzerrung eine Ellipse) jedoch als Projektionsobjekt in der Umgebung des Kraftfahrzeugs erzeugt, so ist das dem Fahrer des Kraftfahrzeugs dargestellte Gesamtbild weitgehend von dessen Augenposition innerhalb des Kraftfahrzeugs unabhängig.

Gegenüber der Anzeige des Zielobjekts auf einem Bordmonitor oder einer vergleichbaren Anzeigeeinheit besitzt die Erfindung den Vorteil, dass der Bediener seinen Blick nicht von der Umgebung weg und auf den Bordmonitor lenken muss. Stattdessen sieht er das Zielobjekt unmittelbar an der Zielposition.

Im Folgenden werden die Erfindung, weitere Vorteile der Erfindung, sowie vorteilhafte Ausführungsformen und Weiterbildungen der Erfindung - eingebettet in grundlegende Überlegungen zur Erzeugung von Projektionsobjekten durch an einem Kraftfahrzeug vorgesehene Projektionsmittel - näher beschrieben. Die Mehrzahl der dabei genannten Ausführungsformen der Erzeugung von Projektionsobjekten durch an einem Kraftfahrzeug vorgesehene Projektionsmittel ist auch und insbesondere im speziellen Zusammenhang mit der Erfindung vorteilhaft anwendbar. Dies gilt insbesondere jedoch nicht ausschließlich - für die in den abhängigen Patentansprüchen genannten Merkmale.

Die Erzeugung von Projektionsobjekten durch an einem Kraftfahrzeug vorgesehene Projektionsmittel kann in vielen Einsatzsituationen vorteilhaft sein. Die nachfolgenden Ausführungen gelten auch und insbesondere für Projektionsobjekte, die als Zielobjekte oder Hilfsobjekte bei dem erfindungsgemäßen Verfahren dienen. Als Hilfsobjekte bei dem erfindungsgemäßen Verfahren kommen insbesondere Steuerpfeile zur Verdeutlichung von Verschieberichtungen des Zielobjekts in Frage.

Durch die Erzeugung zumindest eines Projektionsobjekts durch an einem Kraftfahrzeug vorgesehene Projektionsmittel kann zumindest ein voraussichtlicher zukünftiger Aufenthaltsort des Kraftfahrzeugs markiert werden, insbesondere zumindest flächig markiert werden. Insbesondere eine flächige Markierung lässt für den Betrachter tatsächlich bzw. einfach und anschaulich erkennen, welche Konsequenzen sich aus dem voraussichtlichen zukünftigen Aufenthalt des Kraftfahrzeugs an der jeweiligen Stelle ergeben. Unter einer zumindest flächigen Markierung wird dabei jede Markierung verstanden, die einen bestimmten Flächenbereich - insbesondere auf der Fahrbahn, alternativ aber auch auf einer anderen Projektionsfläche oder schwebend im freien Raum - oder ein bestimmtes Gebiet im dreidimensionalen Raum definiert. Die Markierung kann darin bestehen, dass der jeweilige Flächenbereich bzw. das Gebiet im Raum optisch massiv gefüllt wird oder mit einem Muster gefüllt wird. Alternativ oder zusätzlich kann der jeweilige Flächenbereich bzw. das Gebiet im Raum auch durch eine optische Umrandung oder in sonstiger Weise definiert werden. Insbesondere durch eine zumindest flächige Markierung kann etwa durch einen Betrachter im Kraftfahrzeug abgeschätzt werden, ob etwa ein Parkplatz tatsächlich die für das Kraftfahrzeug erforderliche Größe hat und ob er kollisionsfrei erreichbar ist. Die bloße Anzeige etwa einer linienförmigen Bewegungstrajektorie des Fahrzeugschwerpunkts oder eine beispielsweise pfeilartige Kennzeichnung einer Bewegungsrichtung würde demgegenüber in vielen Situationen nur einen Beitrag mit geringer Aussagekraft liefern. Durch eine flächige Markierung kann also besonders aussagekräftig der Platzbedarf bzw. Raumbedarf des Kraftfahrzeugs bei einem bevorstehenden Fahrmanöver gekennzeichnet werden. Unter einem Fahrmanöver wird dabei insbesondere ein Einparkmanöver, ein Rangiermanöver und/oder ein Wendemanöver verstanden.

Vorzugsweise ist das Zielobjekt bei dem erfindungsgemäßen Verfahren also zumindest flächig ausgebildet.

Unter einem Projektionsobjekt im Sinne der Erfindung kann jede außerhalb des Kraftfahrzeugs auftretende Lichterscheinung angesehen werden, die durch die an dem Kraftfahrzeug vorgesehenen Projektionsmittel verursacht wird. Als Projektionsmittel im Sinne der Erfindung werden nicht angesehen konventionelle Fahrzeugscheinwerfer und Fahrzeugleuchten, die in erster Linie zur Erhellung der Umgebung des Fahrzeugs dienen (z.B. Abblendlicht und Fernlicht) oder die zu einer verbesserten Erkennbarkeit des Fahrzeugs dienen, ohne gezielt Licht an eine Projektionsstelle in der Umgebung des Fahrzeugs abzugeben (z.B. Heckleuchten).

Die Projektion kann so ausgeführt werden, dass ein erzeugtes Projektionsobjekt - insbesondere das Zielobjekt und/oder bestimmte Hilfsobjekte - nur für Insassen des projizierenden Fahrzeugs, insbesondere den Fahrer, sichtbar ist, für andere Verkehrsteilnehmer hingegen unsichtbar oder zumindest schwer erkennbar. Auf diese Weise kann dem unter Umständen bestehenden Bedürfnis des Fahrers Rechnung getragen werden, andere Verkehrsteilnehmer nicht an seinen Planungen - sofern das zumindest eine Projektionsobjekt solche Planungen betrifft - und/oder an Informationsanzeigen seines Fahrzeugs teilhaben zu lassen. Es kann so gegebenenfalls auch vermieden werden, dass andere Verkehrsteilnehmer durch Projektionen gestört bzw. irritiert werden. Erreicht werden kann eine ausschließlich für den Fahrer sichtbare Projektion beispielsweise durch die Anwendung von Infrarot-Projektionstechniken. Denkbar sind aber auch andere Projektionstechniken, wie etwa die Verwendung von polarisiertem Licht. Der Fahrer und gegebenenfalls weitere Insassen des projizierenden Kraftfahrzeugs können dann unter Verwendung optischer Hilfsmittel in die Lage versetzt werden, Projektionsobjekte zu sehen, die für andere Verkehrsteilnehmer im Wesentlichen unsichtbar sind. Als optische Hilfsmittel können dabei beispielsweise spezielle Filter dienen, die vorzugsweise an der Windschutzscheibe des Kraftfahrzeugs anzubringen sind, oder eine Kamera mit nachgelagerter Bildwiedergabeeinheit zur Wiedergabe des gegebenenfalls nachverarbeiteten Kamerabilds. Die optischen Hilfsmittel müssen geeignet auf die spezielle verwendete Projektionstechnik abgestimmt sein - beispielsweise kann eine Infrarotkamera Verwendung finden, um Projektionsobjekte sichtbar zu machen, die durch eine Infrarotprojektion erzeugt werden.

Gemäß einer bevorzugten Ausführungsform der Erfindung wird mittels der an dem Kraftfahrzeug vorgesehenen Projektionsmittel zusätzlich zu dem Zielobjekt zumindest ein zur Fahrerinformation dienendes Hilfsobjekt erzeugt und die Erzeugung des zumindest einen Hilfsobjekts erfolgt so, dass das zumindest eine Hilfsobjekt für andere Verkehrsteilnehmer ohne optische Hilfsmittel im Wesentlichen unsichtbar ist. Für den Fahrer des projizierenden Kraftfahrzeugs hingegen wird das zumindest eine für andere Verkehrsteilnehmer im Wesentlichen unsichtbare Hilfsobjekt durch optische Hilfsmittel sichtbar gemacht.

Die Fälle der schweren Erkennbarkeit und der vollständigen Unsichtbarkeit seien im Rahmen des vorliegenden Dokuments zusammengefasst durch die Ausdrucksweise "im Wesentlichen unsichtbar". Sofern nicht explizit anders erwähnt, ist im Folgenden jeweils "im Wesentlichen unsichtbar" gemeint, wenn von "unsichtbar" gesprochen wird. Wenn von Sichtbarkeit "ausschließlich" für den Fahrer gesprochen wird, so ist damit gemeint, dass die jeweilige Information für Personen außerhalb des Kraftfahrzeugs "im Wesentlichen unsichtbar" ist. Der Vollständigkeit halber sei erwähnt, dass unter Unsichtbarkeit im vorliegenden Zusammenhang selbstverständlich nicht der Fall einer Verdeckung der Sicht eines Betrachters auf das Projektionsobjekt zu verstehen ist. Gemeint ist beispielsweise die Unsichtbarkeit einer Lichterscheinung aufgrund der Wellenlänge oder Polarität des zu der Lichterscheinung beitragenden Lichts.

Die Projektion kann so ausgeführt werden, dass die erzeugten Projektionsobjekte ebenfalls oder sogar ausschließlich für andere Verkehrsteilnehmer sichtbar sind. Ist die Projektion so gestaltet, dass sie für andere Verkehrsteilnehmer sichtbar ist, kann durch die Projektion beispielsweise ein benötigter Platz bzw. Raum in der Fahrzeugumgebung - etwa ein Parkplatz - optisch erkennbar markiert und somit gewissermaßen reserviert werden.

Vorteilhafterweise kann die Projektion auch so gestaltet werden, dass mehrere Projektionsobjekte erzeugt werden, und dass nur ein Teil derselben für andere Verkehrsteilnehmer sichtbar ist, während ein anderer Teil der erzeugten Projektionsobjekte für die anderen Verkehrsteilnehmer unsichtbar ist. Für den Fahrer des projizierenden Kraftfahrzeugs sind hingegen vorzugsweise sämtliche erzeugten Projektionsobjekte sichtbar. So kann beispielsweise eine wesentliche Kerninformation (z.B. das erfindungsgemäße Zielobjekt, etwa zur Markierung eines Parkplatzes) sowohl für den Fahrer als auch für andere Verkehrsteilnehmer sichtbar sein, wohingegen Zusatzinformationen (z.B. Rangier-Anweisungen an den Fahrer) bzw. Hilfsobjekte (z.B. Steuerpfeile zur Anzeige einer Bedienmöglichkeit) nur dem Fahrer vorbehalten sind.

Ein für andere Verkehrsteilnehmer unsichtbares Projektionsobjekt kann aus nur einem Objektteil bestehen. Wenn dieser Objektteil unsichtbar ist, ist das ganze Projektionsobjekt unsichtbar. Ebenso kann selbstverständlich auch ein einziges Projektionsobjekt mehrere Objektteile umfassen, wobei zumindest ein Objektteil für andere Verkehrsteilnehmer sichtbar ist, während zumindest ein anderer Objektteil für die anderen Verkehrsteilnehmer unsichtbar ist. Etwa kann ein Projektionsobjekt aus einem symbolischen Objektteil und einer Beschriftung als weiterem Objektteil bestehen. Es kann dann der symbolische Objektteil für alle Verkehrsteilnehmer sichtbar dargestellt werden, während die Beschriftung nur für den Fahrer des projizierenden Fahrzeugs sichtbar dargestellt wird.

Die unterschiedliche Sichtbarkeit unterschiedlicher Projektionsobjekte bzw. Objektteile kann im einfachsten Fall dadurch erreicht werden, dass unterschiedliche Projektionsmittel Anwendung finden. Ohne Hilfsmittel sichtbare Projektionsobjekte bzw. Objektteile werden dann von ersten Projektionsmitteln erzeugt, nur mit Hilfsmitteln sichtbare (und ansonsten unsichtbare) Projektionsobjekte bzw. Objektteile von zweiten Hilfsmitteln.

Es kann auch eine Bedienmöglichkeit vorgesehen werden, durch welche der Fahrer beeinflussen kann, ob ein Projektionsobjekt bzw. ein Objektteil eines solchen für andere Verkehrsteilnehmer sichtbar sein soll. Vorzugsweise ist also mittels einer bei dem Kraftfahrzeug vorgesehenen Bedienmöglichkeit steuerbar, ob ein Projektionsobjekt bzw. ein Objektteil eines solchen für andere Verkehrsteilnehmer sichtbar ist.

Durch die Erzeugung eines Projektionsobjekts außerhalb des Kraftfahrzeugs kann beispielsweise ein Parkplatz,oder der von einem Kraftfahrzeug für ein Rangier- bzw. Wendemanöver benötigte Rangierraum wirkungsvoll gekennzeichnet werden. So kann bei einem Rangiermanöver beispielsweise anderen Verkehrsteilnehmern durch die Projektion eines - vorzugsweise in etwa die Breite des Kraftfahrzeugs besitzenden - Bandes (bzw. Fahrschlauchs) auf die Fahrbahnoberfläche angezeigt werden, in welche Bereiche der Fahrbahn sie nicht eindringen sollten, um eine Kollision mit dem projizierenden Kraftfahrzeug zu vermeiden bzw. ihm ein ungestörtes Rangieren zu ermöglichen.

Besonders vorteilhaft ist eine flächige Markierung, die eine senkrechte Projektion des von dem Kraftfahrzeug voraussichtlich zukünftig eingenommenen Raums auf der Fahrbahn markiert. Es kann demnach vorteilhaft sein, das Zielobjekt bei dem erfindungsgemäßen Verfahren so auszubilden, dass es in etwa den Grundriss des projizierenden Kraftfahrzeugs wiedergibt. Durch eine gezielte Zugabe im Sinne einer Vergrößerung der markierten Fläche kann aber auch gezielt ein Sicherheitszuschlag vorgesehen werden.

Vorzugsweise ist das zu einer flächigen Markierung dienende Projektionsobjekt (bzw. sind die dazu dienenden Projektionsobjekte) selbst zumindest flächig ausgedehnt. Alternativ oder zusätzlich ist aber selbstverständlich etwa auch eine linienförmige Umrandung eines flächigen Bereichs verwendbar, um eine flächige Markierung zu erreichen. Für die Umrandung eines flächig zu markierenden Bereichs muss weniger Energie aufgewendet werden als für das massive optische Ausfüllen der Fläche des Bereich. Weiters erlaubt eine Füllung mit einem Muster (z.B. Schraffur) eine energieärmere flächige Markierung als eine massive Füllung. Eine unterbrochene Linie (z.B. Punkt- oder Strichlinie) kann mit weniger Energieaufwand erzeugt werden als eine durchgezogene Linie.

Besonders vorteilhaft ist eine Projektion, die sich dem Betrachter dreidimensional darstellt. Dies kann beispielsweise in an sich bekannter Weise erreicht werden durch eine an sich im Wesentlichen zweidimensionale Projektion, die vom Betrachter aber aufgrund perspektivischer Darstellungselemente dreidimensional wahrgenommen wird. Eine dreidimensionale Darstellung - insbesondere für Insassen, etwa den Fahrer, des mit den Projektionsmitteln ausgerüsteten Kraftfahrzeugs - kann ferner auch erreicht werden durch verschiedenste Techniken der 3D-Darstellung, bei welchen durch technische Hilfsmittel (z.B. Shutter-Brille, Rot-Grün-Filter, Polarisationsfilter, etc.) erreicht wird, dass den beiden Augen des Betrachters leicht unterschiedliche - beispielsweise perspektivisch leicht versetzte - Bilder dargeboten werden, wodurch der Effekt einer räumlichen Wahrnehmung entsteht. Zur verbesserten Benutzbarkeit wird die Anbringung solcher Stereoprojektions-Hilfsmittel bzw. Stereosicht-Hilfsmittel an der Windschutzscheibe des Kraftfahrzeugs bzw. ihre Einarbeitung in die Windschutzscheibe vorgeschlagen. Dies ist insbesondere unter Verwendung eines oder mehrerer Polarisationsfilter realisierbar.

Typischerweise werden Projektionsobjekte erzeugt, indem Licht auf die Oberfläche eines festen (also nicht flüssigen oder gasförmigen) Körpers geworfen wird. Es dient dann also die Oberfläche des Körpers als Projektionsfläche. Ein Projektionsobjekt im Sinne der Erfindung kann unter bestimmten Umständen und unter Zuhilfenahme geeigneter Techniken aber auch an einer Projektionsstelle "im freien Raum" - also nicht auf der Oberfläche eines Festkörpers, sondern beispielsweise "in der Luft schwebend" - erzeugt werden.

Ein solches "im freien Raum" erzeugtes Projektionsobjekt kann beispielsweise im Wesentlichen, flächig ausgebildet sein oder zumindest für den Betrachter flächig in Erscheinung treten. Hierzu kann etwa eine Nebelwand als Projektionsfläche genutzt werden. Um ein dreidimensionales Erscheinungsbild zu erreichen, ist ganz besonders vorteilhaft die Anwendung von Techniken, die tatsächlich die Erzeugung eines bereits an sich dreidimensional beschaffenen Projektionsobjekts zulassen. Durch eine an sich dreidimensionale Projektion kann einem Fahrzeuginsassen ebenso wie einem außerhalb des Kraftfahrzeugs befindlichen Betrachter der Projektion - etwa einem anderen Verkehrsteilnehmer - gleichermaßen eine dreidimensionale Darstellung an derselben Projektionsstelle dargeboten werden, denn durch die nachfolgend beschriebenen Techniken können Darstellungen realisiert werden, deren Dreidimensionalität nahezu unabhängig vom Blickwinkel des Betrachters ist. Eine solche dreidimensionale Projektion ist ganz besonders vorteilhaft wegen ihres realistischen räumlichen Erscheinungsbilds, welches eine hohe Aufmerksamkeit des Betrachters und eine wirkungsvolle Informationsvermittlung zur Folge haben kann. Da eine solche dreidimensionale Projektion typischerweise aus der Fahrbahnebene räumlich herausragt oder über dieser "schwebt", ist sie besonders gut erkennbar und wird nur mit geringer Wahrscheinlichkeit verdeckt. Besonders vorteilhaft ist bei dem erfindungsgemäßen Verfahren somit eine dreidimensionale Ausbildung des Zielobjekts.

Technisch realisierbar ist eine solche dreidimensionale Projektion etwa durch holographische Projektion, beispielsweise mit Hilfe kohärenter Lichtquellen (Laser). Für die holographische Projektion notwendige kohärente Lichtquellen können in an sich aus dem Stand der Technik bekannter Art und Weise beispielsweise mittels Teilung eines Laserstrahls mit Hilfe eines halbtransparenten Spiegels erzeugt werden.

Gegebenenfalls kann für die Projektion an der Projektionsstelle ein speziell ausgestaltetes Medium geschaffen werden, in welches bzw. auf welches projiziert wird. Alternativ oder zusätzlich kann an der Projektionsstelle auch eine Grenze zweier Medien mit unterschiedlichen optischen Eigenschaften geschaffen werden. Es kann dann speziell die Grenze zwischen den beiden Medien geeignete optische Eigenschaften aufweisen, um dort ein Projektionsobjekt zu erzeugen.

Gemäß einer besonders vorteilhaften Ausführungsform der Erfindung wird eine holographische Projektion auf eine oder mehrere Ultraschallwellenfronten vorgenommen. Vorzugsweise sind die Ultraschallwellenfronten hinsichtlich ihrer räumlichen Anordnung steuerbar. Dabei kann mit Hilfe speziell zu diesem Zweck geschaffener stehender Ultraschallwellen bzw. einer räumlichen Anordnung solcher stehender Ultraschallwellen eine Inhomogenität der wellenoptischen Eigenschaften eines Mediums geschaffen werden. Mittels dieser Inhomogenität können die für die holographische Projektion verwendeten kohärenten Lichtquellen ein Defraktionsmuster an vorgegebenen Stellen im Raum bilden. Diese Stellen im Raum verhalten sich somit selbst wie Lichtquellen im Raum (vgl. physikalischer Effekt der Defraktion), wodurch aus der Sicht eines Betrachters ein im Raum schwebendes dreidimensionales Objekt gebildet werden kann. Eine geeignete Ultraschallwellenfront kann etwa mittels ebenfalls kohärenter untereinander synchronisierter Ultraschallsignalgeber geschaffen werden. Solche Ultraschallsignalgeber können in einem Medium (beispielsweise in Wasser oder - für die vorliegende Anwendung von höherer Relevanz - in Luft) stehende Wellen erzeugen, die gegebenenfalls auch räumlich verschiebbar sind. Indem der Luftdruck infolge der Wellen an den betreffenden Stellen im Raum ungleichmäßig verteilt wird, ergeben sich auch für die optischen Eigenschaften der betreffenden Stellen bestimmte Veränderungen, insbesondere bilden sich Minima bzw. Maxima im Hinblick auf bestimmte optische Eigenschaften. Die daraus resultierende Inhomogenität kann als Medium, bildlich gesprochen "Kristallisationszentren", für die Bildung eines Defraktionsmusters genutzt werden.

Gemäß einer anderen vorteilhaften Ausführungsform der Erfindung kann eine holographische Projektion auch an einer an der Projektionsstelle zumindest kurzzeitig geschaffenen Wärmefront erzeugt werden. Die Wärmefront kann durch Beeinflussung der lokalen Temperatur der Luft an der Projektionsstelle mit Hilfe entsprechender technischer Mittel, insbesondere mit Hilfe von Mitteln zum Erwärmen der Luft (beispielsweise mit Hilfe eines weiteren unsichtbaren gelenkten Laserstrahls oder mehrerer auf eine Ebene im Raum fokussierter Laserstrahlen) geschaffen werden. Durch solche Techniken kann beispielsweise lokal Wasserdampf bzw. Nebel erzeugt werden, da die Wassertröpfchen in der Luft - beispielsweise mit einem Laserstrahl - erhitzt werden können. Eine auf solche Art und Weise erzeugbare "Nebelwand" kann als Projektionsfläche für die erfindungsgemäße Projektion dienen.

Die genannten Inhomogenitäten wellenoptischer Eigenschaften des Mediums können in beiden oben beschriebenen vorteilhaften Ausführungsformen auch pulsierend, d.h. für jeweils eine kurze Zeit, und an annähernd demselben Ort geschaffen werden, da eine aus schnell pulsierenden Raumbereichen zusammengesetzte Projektion in der menschlichen Wahrnehmung als zeitlich und räumlich kontinuierlich wahrgenommen wird. Besonders vorteilhaft ist es, wenn hierfür eine Synchronisation der Einrichtung zur Schaffung wellenoptischer Inhomogenitäten mit der Steuerung des Projektionsmittels geschaffen wird.

Bei der praktischen Umsetzung der beschriebenen Verfahren ist zu beachten, dass ein geschaffenes Projektionsmedium unter Umständen nur für sehr kurze Zeit in unveränderter Form zur Verfügung steht. Beispielsweise kann eine geschaffene Wärmefront innerhalb von Sekunden verschwimmen oder durch Luftströme verändert, z.B. verzerrt, werden. Ein lokal erzeugter Überdruck wird in der Regel innerhalb weniger Millisekunden ausgeglichen. Nur im Fall einer stehenden Welle gibt es Knotenpunkte und Schwingungsorte im Raum, die periodisch ihre Minima und Maxima erreichen, weshalb eine solche Lösung bevorzugt wird. Um einer jeweils nur kurzzeitigen Nutzbarkeit des erzeugten Projektionsmediums gerecht zu werden, kann die Erzeugung von Projektionsobjekten in einem gepulsten Betrieb unter Synchronisation der Einrichtungen zur Schaffung des Projektionsmediums und der eigentlichen projizierenden Einrichtung erfolgen. Für eine in der menschlichen Wahrnehmung als zeitkontinuierlich wahrgenommene Projektion können dabei ca. 24 Einzelprojektionen pro Sekunde ausreichen. Untersuchungen haben ergeben, dass dabei jede Einzelprojektion eine Zeitdauer von wenigen Nanosekunden nicht überschreiten muss, um eine ausreichende, Erkennbarkeit zu gewährleisten.

Vorzugsweise umfasst das Kraftfahrzeug selbst geeignete Mittel zum Schaffen eines speziell ausgestalteten Projektionsmediums (beispielsweise zur Erzeugung einer Ultraschallwellenfront bzw. zur anderweitigen Schaffung wellenoptischer Inhomogenitäten) und gegebenenfalls zur Steuerung der räumlichen Anordnung derselben. Beispielsweise können an dem Kraftfahrzeug geeignete Ultraschallsignalgeber zu diesem Zweck vorgesehen werden. Durch die Möglichkeit der Steuerung der räumlichen Anordnung kann das Projektionsmedium dort geschaffen werden, wo ein Projektionsobjekt erzeugt werden soll Das Kraftfahrzeug ist bei geeigneter Steuerung dann eigenständig in der Lage, durch eine entsprechende Projektionstechnik dreidimensionale Projektionsobjekte zu erzeugen. Es ist aber auch vorstellbar, dass an typischen Projektionsstellen (etwa auf großen Parkplätzen oder in einem Parkhaus) durch eine stationäre Einrichtung ein geeignetes Projektionsmedium bereitgestellt wird, welches dann für alte Verkehrsteilnehmer, die eine solche Projektionsstelle passieren, nutzbar ist.

Ein "im freien Raum" erzeugtes Projektionsobjekt kann im Wesentlichen zwei- oder dreidimensional ausgebildet sein. Auch die Sichtbarkeit eines zweidimensionalen Projektionsobjekts kann unter Umständen verbessert werden, wenn die Projektion nicht auf eine Projektionsfläche vorgenommen wird, sondern wenn das Projektionsobjekt, gegebenenfalls unter Nutzung eines Projektionsmediums wie etwa einer Ultraschallwellenfront, gewissermaßen "schwebend" im freien Raum erzeugt wird. So können etwa auch zweidimensionale - nicht nur durch ihre perspektivische Ansicht, sondern tatsächlich - aus der Fahrebene herausragende Projektionsobjekte erzeugt werden.

Generell - d.h. auch bei dreidimensionalen Projektionen, insbesondere aber bei zweidimensionalen Projektionen - kann, es bei Projektionsobjekten, die sich dem Betrachter abhängig von dessen Blickwinkel verzerrt darstellen könnten, vorteilhaft sein, den Blickwinkel des jeweiligen Betrachters bei der Projektion derart zu berücksichtigen, dass sich aus dem jeweiligen Blickwinkel ein zumindest annähernd geometrisch korrektes (unverzerrtes) Bild ergibt. Die Berücksichtigung kann insbesondere in einer absichtlichen Verzerrung des zu projizierenden Bildes bestehen, welche die blickwinkelabhängige perspektivische Verzerrung bei der Betrachtung des Projektionsobjekts ausgleicht. Ein solches Vorgehen ist in ganz anderem Zusammenhang etwa bekannt für fest auf einer Spielfläche von Sportstadien angebrachte Werbeanzeigen, welche derart auf eine bestimmte Kameraperspektive abgestimmt sind, dass sie im Kamerabild unverzerrt erscheinen. Sofern die Blickrichtung eines Betrachters auf das erfindungsgemäß erzeugte zumindest eine Projektionsobjekt bekannt ist - zum Beispiel im Falle eines anderen Verkehrsteilnehmers, dessen Position durch Umfeldsensorik des Kraftfahrzeugs erkannt wird oder durch Fahrzeug-Fahrzeug-Kommunikation gemeldet wird - ist es vorteilhaft, die bekannte Blickrichtung in an sich bekannter Art und Weise bei der Projektion zu berücksichtigen. Ansonsten können Annahmen bezüglich eines Betrachtungswinkels getroffen werden (z.B. gemäß Kartenmaterial eines Navigationssystems). Alternativinsbesondere, wenn nicht bekannt ist, in welcher Richtung sich ein Betrachter befinden könnte oder wenn mehrere mögliche Richtungen in Betracht zu ziehen sind - können auch einfach mehrere Darstellungen gleichzeitig projiziert werden, die jeweils auf einen bestimmten Betrachtungswinkel bzw. Betrachtungswinkelbereich abgestimmt sind. Somit besteht eine hohe Wahrscheinlichkeit, dass für einen aus unbekanntem Blickwinkel betrachtenden Betrachter zumindest eine der Darstellungen gut erkennbar und informativ ist. Eine Berücksichtigung des Blickwinkels des Betrachters durch entsprechende Verzerrung kann sich gegebenenfalls auf sämtliche erzeugten Projektionsobjekte oder auch nur auf einzelne erzeugte Projektionsobjekte beziehen. Insbesondere für Darstellungselemente, die sich in der Wahrnehmung des Betrachters aus der Projektionsebene herausheben sollen, ist eine solche Darstellungsform vorteilhaft.

Die Erzeugung von Projektionsobjekten durch bei einem Kraftfahrzeug vorgesehene Projektionsmittel kann besonders vorteilhaft zur Anzeige eines bevorstehenden Fahrmanövers eines Kraftfahrzeugs eingesetzt werden. Es wird dabei vorzugsweise zumindest ein voraussichtlicher zukünftiger Aufenthaltsort des Kraftfahrzeugs während und/oder am Ende des Fahrmanövers markiert. Dies kann erfindungsgemäß insbesondere die Zielposition sein. Unter einem Fahrmanöver wird dabei insbesondere ein Einparkmanöver, ein Rangiermanöver und/oder ein Wendemanöver verstanden. Ein solches bevorstehendes Fahrmanöver kann - wie dies bei der Erfindung weitgehend vorausgesetzt wird - auf einer Planung des Fahrers oder auf einer automatischen Planung, etwa durch ein Fahrerassistenzsystem, beruhen. Als eine Menge zukünftiger Aufenthaltsorte des Kraftfahrzeugs, die durch ein oder mehrere Projektionsobjekte markiert werden können, kann neben einer Zielposition auch eine Trajektorie für ein geplantes Fahrmanöver, insbesondere ein Park-, Rangier- oder Wendemanöver verstanden werden. Vorzugsweise erfolgt die Markierung einer solchen Trajektorie zumindest flächig. Wie weiter oben bereits beschrieben wird der erforderliche Platzbedarf dadurch besonders anschaulich dargestellt.

Bei bestimmten Fahrmanövern, insbesondere bei einem Parkmanöver, kann es besonders vorteilhaft sein; eine Zielposition durch Projektion zu markieren, die das Kraftfahrzeug am Ende des Fahrmanövers erreichen soll bzw. wird. Um dem typischen Sprachgebrauch gerecht zu werden, gemäß welchem eine bestimmte Anordnung und/oder Ausrichtung eines Kraftfahrzeugs als Position desselben bezeichnet wird, wird hier von einer Zielposition gesprochen. Vorzugsweise wird die Zielposition aber zumindest flächig markiert und ist nicht etwa punktförmig zu verstehen. Insbesondere kommt die Erzeugung von einem oder mehreren Projektionsobjekten in Betracht, welche die Grundfläche des Kraftfahrzeugs in der Zielposition optisch kennzeichnen. Über den bloßen Effekt der Information für den Fahrer hinaus, kann durch die Markierung einer Zielposition eines Parkmanövers beispielsweise ein avisierter Parkplatz auch für andere Verkehrsteilnehmer erkennbar reserviert werden. Umgekehrt kann die Projektion gegebenenfalls auch so ausgeführt werden und/oder vom Fahrer so einstellbar sein, dass sie nur für den Fahrer bzw. Insassen des projizierenden Kraftfahrzeugs sichtbar ist. Beispielsweise könnte es in bestimmten Situationen im Interesse des Fahrers liegen, seine Parkabsicht gerade nicht für andere Verkehrsteilnehmer erkennbar zu machen.

Vorzugsweise kann zumindest ein erzeugtes Projektionsobjekt - insbesondere ein Projektionsobjekt, welches erfindungsgemäß die Zielposition eines Fahrmanövers markiert - durch eine auf das Projektionsobjekt bezogene Bedienaktion des Fahrers derart verändert werden, dass ein veränderter voraussichtlicher zukünftiger Aufenthaltsort des Kraftfahrzeugs definiert bzw. markiert wird. Die gegebenenfalls durch eine Bedienaktion des Bedieners hervorgerufene Veränderung des markierten voraussichtlichen zukünftigen Aufenthaltsorts des Kraftfahrzeugs kann insbesondere darin bestehen, dass der Projektionsort bzw. die Projektionsstelle des zumindest einen erfindungsgemäß erzeugten Projektionsobjekts verändert wird.

Neben der Zielposition kann für das Fahrmanöver durch Projektion ein den benötigten Rangierraum kennzeichnendes Fahrbahn-Band (bzw. Fahrschlauch, Trajektorie) markiert bzw. reserviert werden. Dabei kann es sinnvoll sein, dem Fahrer zu ermöglichen, den Weg zu verändern, auf dem das Kraftfahrzeug zur Zielposition gelangen soll. In einem solchen Fall kann es vorteilhaft sein, wenn es dem Fahrer ermöglicht wird, durch Bedienaktionen die Form des Fahrbahn-Bands zu verändern.

Im Kraftfahrzeug kann zur Umsetzung solcher Ausführungsformen des erfindungsgemäßen Verfahrens gegebenenfalls ein geeignetes Bedienelement zur Erfassung von Bedienaktionen des Fahrers vorgesehen werden.

Die Erfindung stellt eine Weiterbildung bzw. Abwandlung der Lehre der deutschen Patentanmeldung der Anmelderin mit dem Aktenzeichen 102006026092.9 dar, deren gesamter Inhalt zur Offenbarung des vorliegenden Dokuments gehören soll (incorporated by reference). Die erfindungsgemäße Erzeugung des Zielobjekts als Projektionsobjekt außerhalb des Kraftfahrzeugs in der realen Fahrzeugumgebung kann alternativ oder zusätzlich zur aus der deutschen Patentanmeldung 102006026092.9 bekannten Darstellung eines Zielobjekts auf einer Anzeigeeinheit im Fahrzeuginneren erfolgen. Das Zielobjekt kann dann vorzugsweise durch zumindest eine Bedienaktion des Fahrers so verschoben werden, dass es schließlich eine gewünschte Endposition eines Fahrmanövers, insbesondere eine gewünschte Parkposition, markiert.

Vorzugsweise wird auf diese Weise dem Fahrer die Möglichkeit gegeben, ein projiziertes Zielobjekt, welches eine Endposition eines voll- oder teilautomatisch ausführbaren Parkmanövers markiert, in eine gewünschte Parkposition zu verschieben oder eine von mehreren möglichen Parkpositionen auszuwählen.

Eine Weiterbildung der Lehre der deutschen Patentanmeldung der Anmelderin mit dem Aktenzeichen 102006026092.9 kann insbesondere insofern vorliegen, da weiterhin - zusätzlich zur vorliegenden Erfindung - die dort offenbarte Anzeige auf einer Anzeigeeinheit im Inneren des Kraftfahrzeugs stattfinden kann.

Die deutsche Patentanmeldung 102006026092.9 beschreibt hauptsächlich das folgende Verfahren:
"Verfahren zur Steuerung eines zumindest teilautomatisch durchführbaren Einparkvorgangs, durch welchen ein Kraftfahrzeug von einer Istposition in eine Sollposition verbringbar ist, mit den Schritten:
   - ein Bild der Umgebung des Kraftfahrzeugs wird durch eine Anzeigeeinheit im Inneren des Kraftfahrzeugs dargestellt,
   - in dem Umgebungsbild wird ein virtuelles Zielobjekt dargestellt, dessen Bildposition im Umgebungsbild einer Zielposition für das Kraftfahrzeug in der Umgebung des Kraftfahrzeugs entspricht,
   - in Abhängigkeit von Bedienaktionen eines Bedieners des Kraftfahrzeugs wird die Bildposition des Zielobjekts in dem Umgebungsbild verändert,
   - durch eine Auswahlaktion des Bedieners wird die veränderte Bildposition des Zielobjekts ausgewählt und eine der veränderten Bildposition des Zielobjekts entsprechende veränderte Zielposition für das Kraftfahrzeug wird als Sollposition des Einparkvorgangs übernommen."

Durch den erfindungsgemäßen Übergang zur Erzeugung des Zielobjekts als Projektionsobjekt in der Umgebung des Kraftfahrzeugs und die (bei der DE 102006026092.9 durch Klarstellung in der Beschreibung erreichte) Verallgemeinerung auf andere Fahrmanöver ergibt sich:
Verfahren zur Steuerung eines zumindest teilautomatisch durchführbaren Fahrmanövers, durch welches ein Kraftfahrzeug von einer Istposition in eine Sollposition verbringbar ist, mit den Schritten:
   - in der Umgebung des Kraftfahrzeugs wird durch Projektion mittels an dem Kraftfahrzeug vorgesehener Projektionsmittel ein virtuelles Zielobjekt erzeugt, dessen Position in der Umgebung einer Zielposition für das Kraftfahrzeug in der Umgebung des Kraftfahrzeugs entspricht,
   - in Abhängigkeit von Bedienaktionen eines Bedieners des Kraftfahrzeugs wird die Position des Zielobjekts in der Umgebung verändert,
   - durch eine Auswahlaktion des Bedieners wird die veränderte Position des Zielobjekts ausgewählt und eine der veränderten Position des Zielobjekts entsprechende veränderte Zielposition für das Kraftfahrzeug wird als Sollposition des Fahrmanövers übernommen.

In der obigen Beschreibung des Verfahrens ist (da in der Regel eine gewisse Abweichung zwischen der aktuellen Zielposition für das Kraftfahrzeug und der entsprechenden Position des Zielobjekts besteht) von einer Entsprechung zwischen der Position des Zielobjekts in der Umgebung und der Zielposition für das Kraftfahrzeug die Rede. Unter der vereinfachenden Annahme einer idealen Projektion (bei der gilt: Zielposition = Position des Zielobjekts) kann das Verfahren noch anschaulicher geschildert werden als:
Verfahren zur Steuerung eines zumindest teilautomatisch durchführbaren Fahrmanövers, durch welches ein Kraftfahrzeug von einer Istposition in eine Sollposition verbringbar ist, mit den Schritten:
   - in der Umgebung des Kraftfahrzeugs wird durch Projektion mittels an dem Kraftfahrzeug vorgesehener Projektionsmittel ein virtuelles Zielobjekt an einer Zielposition für das Kraftfahrzeug in der Umgebung des Kraftfahrzeugs erzeugt,
   - in Abhängigkeit von Bedienaktionen eines Bedieners des Kraftfahrzeugs wird die Zielposition verändert, wodurch auch das Zielobjekt in der Umgebung des Kraftfahrzeugs verschoben wird,
   - durch eine Auswahlaktion des Bedieners wird die veränderte Zielposition ausgewählt und als Sollposition des Fahrmanövers übernommen.

Spezielle Ausführungsformen der Erfindung ergeben sich - neben der vorliegenden Beschreibung - für den Fachmann in analoger Weise aus den Ausführungsformen, die in der deutschen Patentanmeldung 102006026092.9 geschildert sind. Auf die jeweiligen in der deutschen Patentanmeldung 102006026092.9 offenbarten Merkmale sei hiermit ausdrücklich verwiesen. Zu deren Verständnis sind die jeweiligen Beschreibungsteile und Zeichnungen der deutschen Patentanmeldung 102006026092.9 heranzuziehen.

Insbesondere kann es vorteilhaft sein, wenn zumindest einmalig eine automatische Interpretation der Umgebung des einzuparkenden Kraftfahrzeugs durchgeführt wird, um zumindest eine zulässige und/oder bevorzugte Zielposition zu bestimmen. Eine solche zulässige und/oder bevorzugte Zielposition kann dann als Ausgangspunkt für weitere Veränderungen der Zielposition dienen, die der Fahrer durch entsprechende Bedienaktionen vornehmen kann.

Eine andere bevorzugte Ausführungsform besteht darin, dass alternativ oder zusätzlich durch eine automatische Interpretation der Umgebung eine erste und eine zweite Zielposition bestimmt werden und dass das Zielobjekt durch eine Bedienaktion von der ersten Zielposition zu der zweiten Zielposition verschoben wird. Der Fahrer kann dann sehr einfach zwischen mehreren zulässigen und/oder bevorzugten Zielpositionen auswählen. Eine durch Projektion erzeugte optische Markierung kann dabei zwischen mehreren möglichen Zielpositionen, insbesondere Parkpositionen, "hin- und herspringen".

Eine andere bevorzugte Ausführungsform besteht darin, dass alternativ oder zusätzlich das Zielobjekt so gestaltet ist, dass seine Verkörperung in der Umgebung zumindest teilweise deutlich nach oben über die Fahrbahnebene hinausragt.

Eine andere bevorzugte Ausführungsform besteht darin, dass alternativ oder zusätzlich das Zielobjekt graphisch so gestaltet ist, dass es in der Umgebung ein virtuelles Kraftfahrzeug verkörpert. Besonders vorteilhaft kann das Zielobjekt dabei gestaltet werden, wenn es als dreidimensionales Projektionsobjekt erzeugt wird - gegebenenfalls unter Nutzung eines ah der Projektionsstelle eigens erzeugten Projektionsmediums.

Eine andere bevorzugte Ausführungsform besteht darin, dass alternativ oder zusätzlich das Zielobjekt ganz oder teilweise teiltransparent ausgestaltet ist.

Eine andere bevorzugte Ausführungsform besteht darin, dass alternativ oder zusätzlich die graphische Darstellung des Zielobjekts in der Umgebung zumindest teilweise in Abhängigkeit von der Helligkeit und/oder der Farbe umliegender Objekte in der Umgebung erfolgt.

Eine andere bevorzugte Ausführungsform besteht darin, dass alternativ oder zusätzlich über ein zur Bedienung bzw. Auswahl verwendetes Bedienelement eine unmittelbare haptische Rückmeldung an den Bediener ausgegeben wird und/oder dass die Bedienaktionen des Bedieners zumindest teilweise auf einen Dreh-/Drucksteller bezogen sind.

Eine andere bevorzugte Ausführungsform besteht darin, dass neben der erfindungsgemäßen Erzeugung des Zielobjekts in der Fahrzeugumgebung - ebenfalls durch die Erzeugung zumindest eines Projektionsobjekts - eine zur aktuell eingestellten Zielposition führende Trajektorie und/oder ein erforderlicher Rangierraum kenntlich gemacht wird. Es können also Streckenabschnitte markiert werden, die für ein Fahrmanöver benötigt werden, die also voraussichtlich während des Fahrmanövers befahren werden und demnach zur Vermeidung einer Kollision nicht von anderen Verkehrsteilnehmern befahren oder betreten werden sollten.

Insbesondere kann es vorteilhaft sein, wenn dabei dem Bediener die Möglichkeit gegeben wird, zwischen mehreren möglichen Trajektorien zu einer einzigen Zielposition auszuwählen.

Eine andere bevorzugte Ausführungsform besteht darin, dass alternativ oder zusätzlich Angaben zu einer möglichen Zielposition und/oder zur Bestimmung einer Trajektorie mittels drahtloser Kommunikation von einer Datenbank außerhalb des Kraftfahrzeuges bezogen werden.

Die Weiterbildung bzw. Abwandlung der in anderem Zusammenhang aus der deutschen Patentanmeldung 102006026092.9 bekannten Verfahren in dem Sinne, dass das Zielobjekt als Projektionsobjekt außerhalb des Kraftfahrzeugs erzeugt wird, bietet für den Fahrer unter anderem den Vorteil, dass er seinen Blick nicht auf eine Anzeigeeinheit im Fahrzeuginneren richten muss, sondern unmittelbar die reale für das Fahrmanöver relevante Szenerie betrachten kann. Es kann vorteilhaft sein, die Projektion so zu gestalten, dass sie auch für andere Verkehrsteilnehmer sichtbar ist. Ein Parkplatz kann somit für die anderen Verkehrsteilnehmer erkennbar durch das mit den Projektionsmitteln ausgerüstete Kraftfahrzeug reserviert werden.

Möchte der Fahrer andere Verkehrsteilnehmer jedoch nicht oder nur teilweise an der dargestellten Information teilhaben lassen, kann es vorteilhaft sein, das Zielobjekt oder einen Teil desselben und/oder bestimmte Hilfsinformationen (etwa Steuerpfeile oder numerische Angaben) für andere Verkehrsteilnehmer unsichtbar auszuführen. Dasselbe gilt, wenn andere Verkehrsteilnehmer nicht durch die Projektion irritiert werden sollen.

Mögliche Ausführungsformen und Vorteile der einzelnen oben genannten, an sich teilweise in anderem Zusammenhang aus der deutschen Patentanmeldung 102006026092.9 bekannten Merkmale, ergeben sich in analoger Weise aus der deutschen Patentanmeldung 102006026092.9.

Die obigen Ausführungen sind teilweise speziell auf Parkmanöver zugeschnitten. Vorteile ergeben sich auch für andere voll- oder teilautomatisch ausgeführte Rangiermanöver und Wendemanöver. Es kann vorteilhaft sein, wenn der für ein Rangier- bzw. Wendemanöver erforderliche Platzbedarf des Kraftfahrzeugs durch eine für andere Verkehrsteilnehmer erkennbare Projektion markiert wird. Alternativ oder zusätzlich kann gerade eine auch oder ausschließlich für den Fahrer des mit den Projektionsmitteln ausgerüsteten Kraftfahrzeugs bestimmte erfindungsgemäße Visualisierung entsprechender Informationen des Rangier- bzw. Wendemanövers vorteilhaft sein.

Gemäß einer Weiterbildung der vorliegenden Erfindung wird zur Erprobung bzw. Vorbereitung eines Fahrmanövers zumindest ein Steuerelement des Kraftfahrzeugs (z.B. Lenkrad, Gaspedal, Bremse), idealerweise sogar sämtliche für das jeweilige Fahrmanöver relevanten Steuerelemente, von den zugehörigen Antriebselementen (z.B. Motor, Lenkung) entkoppelt, so dass der Fahrer eine auf das jeweilige Fahrmanöver gerichtete Bedienung des zumindest einen entkoppelten Steuerelements durchführen kann, ohne dabei das Fahrzeug bereits zu bewegen bzw. dessen Bewegung zu beeinflussen. Stattdessen wird durch die vom Fahrer vorgenommene Bedienung des zumindest einen entkoppelten Steuerelements ein erfindungsgemäß erzeugtes Projektionsobjekt in der Umgebung des Kraftfahrzeugs verändert, insbesondere bewegt bzw. verschoben. Vorzugsweise wird durch die vom Fahrer vorgenommene Bedienung des zumindest einen entkoppelten Steuerelements das durch Projektion erzeugte Zielobjekt eines Parkmanövers gesteuert bzw. verschoben. Das Fahrmanöver kann so durch den Fahrer vorab gefahrenfrei erprobt werden. Eine hierzu erforderliche Entkopplung von Steuerelementen und Antriebselementen ist in modernen und zukünftigen Kraftfahrzeugen unter Verwendung so genannter X-by-Wire Techniken verhältnismäßig einfach realisierbar.

Besonders vorteilhaft ist es, wenn bei einer solchen Weiterbildung der vorliegenden Erfindung während der Erprobung Steuersignale, die der Fahrer durch die Bedienung der Steuerelemente erzeugt, aufgezeichnet werden und diese Steuersignale - im Falle einer erfolgreichen Erprobung - anschließend für die Durchführung des entsprechenden realen Fahrmanövers abrufbar sind. Die durch die Bedienung des Steuerelements im entkoppelten Zustand erzeugten Steuersignale können also zu einem späteren Zeitpunkt für eine tatsächliche Bewegung des Kraftfahrzeugs verwendet werden. Der Fahrer kann ein schwieriges Manöver somit zunächst "virtuell erproben" und es nur im Erfolgsfall anschließend "auf Knopfdruck" tatsächlich ausführen.

Im Regelfall beginnt das gemäß einer solchen Weiterbildung der vorliegenden Erfindung "virtuell erprobte" Fahrmanöver bei der aktuellen physikalischen Position des eigenen Kraftfahrzeugs. Dabei kann es aus projektionstechnischen Gründen schwierig sein, das Zielobjekt bereits in kurzer Distanz vom Kraftfahrzeug projektionstechnisch zu erzeugen. In solchen Fällen ist es vorteilhaft, das Zielobjekt erst dann projektionstechnisch zu erzeugen, wenn es sich bereits in solchem Abstand zum Kraftfahrzeug befindet, dass es auch projektionstechnisch darstellbar ist. Eine eventuelle Aufzeichnung der Steuersignale beginnt hingegen vorzugsweise bereits in der Ausgangsposition, um das gesamte Fahrmanöver reproduzieren zu können.

Eventuell aufgezeichnete Steuersignale werden vorzugsweise rechnertechnisch aufbereitet und/oder auf Kollisionsfreiheit überprüft. Sie können auch durch den Fahrer - insbesondere nach dem Ende des virtuellen Manövers und vor der Freigabe des entsprechenden physikalischen Manövers - veränderbar sein. Vorteilhaft ist es, wenn statt einer Komplett-Veränderung eine stellenweise Veränderung vornehmbar ist. Es muss dann beispielsweise keine vollständige Änderung der aufgezeichneten Steuersignale erfolgen. Zudem wird dem Fahrer die Manöverplanung erleichtert, da er seine Aufmerksamkeit auf Details lenken kann, ohne das Gesamtmanöver wesentlich zu verändern.

Zusätzlich oder anstelle von Steuersignalen können auch physikalische Bewegungsparameter, wie etwa Trajektorien oder ein vektorbasiertes Modell des Fahrmanövers im entkoppelten Zustand aufgezeichnet werden, um das virtuell ausgeführte Manöver später zu reproduzieren.

Die Steuersignale (oder andere Parameter) eines so aufgezeichneten Fahrmanövers können auch für eine spätere Wiederholung (z.B. tägliche komplizierte Ausfahrt aus einer Garage) verwendbar vorgehalten werden oder einfach zu Protokollierungszwecken gespeichert werden.

Die Steuersignale (oder andere Parameter) eines so aufgezeichneten Fahrmanövers können auch zum drahtlosen Abgleich mit virtuellen bzw. voraussichtlichen Fahrmanövern anderer Verkehrsmittel in der Umgebung verwendet werden. So kann etwa eine effektive Unfallprävention bewerkstelligt werden.

Anhand der beigefügten Zeichnungen werden nachfolgend weitere Vorteile, Varianten, bevorzugte Ausführungsformen und Weiterbildungen der Erfindung beschrieben. Dabei zeigen im Einzelnen schematisch
- Fig. 1: eine Szenenansicht, in welcher ein Kraftfahrzeug durch Projektion eine voraussichtliche Parkposition markiert, und
- Fig. 2: eine Szenenansicht, in welcher ein Kraftfahrzeug durch Projektion ein als virtuelles Kraftfahrzeug ausgebildetes Projektionsobjekt erzeugt.

Zur Überwindung verschiedener Nachteile des Stands der Technik auf dem Gebiet der Fahrmanöver-Assistenzsysteme bei Kraftfahrzeugen werden nachfolgend verschiedene Verbesserungsmöglichkeiten vorgeschlagen. Die Verbesserungsmöglichkeiten dienen zur Überwindung einzelner oder aller der folgenden Nachteile:
- Bei komplexen Fahrmanövern (z.B. Rangieren, Parken, Wenden) ist bei Verfahren und Vorrichtungen gemäß dem Stand der Technik die Signalisierung des Vorhabens des Fahrers den anderen Verkehrsteilnehmer gegenüber oft unzureichend. Auch kann ein Fahrer die Durchführbarkeit eines Fahrmanövers - selbst wenn sein Kraftfahrzeug über moderne kamerabasierte Fahrerassistenzsysteme verfügt - nicht immer exakt einschätzen.
- Die aus dem Stand der Technik bekannten Fahrerassistenzgrafiken, wie etwa Hilfsgrafiken oder "Platzhalter" für das eigene Fahrzeug, die für den Fahrer von einem (teil-)automatischen Parkassistenzsystem errechnet werden können, werden nur für Fahrzeuginsassen auf einem Bildschirm oder einer vergleichbarer Anzeigeeinrichtung dargestellt. Daher unterstützen solche Systeme nur den Fahrzeuginsassen. Zudem sind Missverständnisse in der Interpretationen des Manövervorhabens seitens anderer Verkehrsteilnehmer möglich (z.B. bei Einpark- und Rangiermanövern, die aus mehreren Teilstrecken zusammengesetzt sind). Wenn der Fahrer die Umgebung des Fahrzeuges direkt betrachtet, steht auch ihm bei Verfahren und Vorrichtungen gemäß dem Stand der Technik die Unterstützung durch die Grafik eines Fahrerassistenzsystems, die etwa auf einem Bildschirm im Fahrzeuginneren ausgegeben wird, nicht mehr zur Verfügung.

Zur Überwindung solcher Nachteile kann das erfindungsgemäße Verfahren Anwendung finden, bei dem zumindest ein Zielobjekt als Projektionsobjekt in die Umgebung des Kraftfahrzeuges einblendet wird. Neben dem Zielobjekt können gegebenenfalls weitere Elemente eines durchführbaren bzw. geplanten Fahrmanövers als Projektionsobjekte in die Umgebung des Kraftfahrzeuges eingeblendet werden.

Zu den oben genannten "Elementen" eines Fahrmanövers können beispielsweise Platzhalter für das eigene Fahrzeug, Symbole, Richtungspfeile und/oder andere durch Projektion erzeugbare Objekte zählen, die der beispielsweise symbolischen Beschreibung eines Manövers dienen können. Als "Fahrmanöver" werden insbesondere Park-, Rangier-und Wendemanöver angesehen. Diese können vom Fahrer beabsichtigte sein und/oder auf einer voll- oder, teilautomatischen Planung durch eine entsprechende Planungseinrichtung des Kraftfahrzeugs beruhen.

Die erfindungsgemäß genutzten Projektionsmittel können sich aus einer einzigen Projektionseinheit oder mehreren Projektionseinheiten zusammensetzen. Die Verwendung mehrerer voneinander beabstandeter Projektionseinheiten kann nützlich sein, um auch nahe am Fahrzeug noch ein räumlich ausgedehntes Projektionsobjekt erzeugen zu können. Auch mehrfarbige oder besonders lichtstarke Projektionen können unter Umständen besser bewerkstelligt werden, wenn mehrere Projektionseinheiten dazu beitragen.

Bei Ausführungsformen der Erfindung, die eine selektive Sichtbarkeit erzeugter Projektionsobjekte, insbesondere des Zielobjekts, vorsehen, kann es gerätetechnisch günstig sein, wenn Projektionsobjekte bzw. Objektteile, die für alle Verkehrsteilnehmer sichtbar sind, von einer ersten Projektionseinheit erzeugt werden, während Projektionsobjekte bzw. Objektteile, die für andere Verkehrsteilnehmer unsichtbar sind, von einer anderen Projektionseinheit erzeugt werden. Es muss dann nicht zwingend eine einzige Projektionseinheit sowohl sichtbare als auch unsichtbare Projektionsobjekte bzw. Objektteile erzeugen.

Die Erzeugung des Zielobjekts und ggf. weiterer Projektionsobjekte kann in einer einfachen Ausgestaltung eines Systems zur Umsetzung des erfindungsgemäßen Verfahrens beispielsweise durch eine lichttechnische, etwa laserbasierte, Projektion auf die Fahrbahn erreicht werden. Eine solche Projektion kann im einfachsten Fall mittels eines lenkbaren Laserstrahls derart auf die Fahrbahn "gezeichnet" werden, dass sich für einen Beobachter der Eindruck eines zwei- oder dreidimensionalen Projektionsobjekts ergibt.

Die Erzeugung des Zielobjekts und ggf. weiterer Projektionsobjekte kann im Sinne der Erfindung aber auch bewirkt werden als eine im Raum "schwebende" bzw. holographische Projektion, oder als zweidimensionale Projektion, die von einem menschlichen Betrachter als räumlich wahrgenommen wird.

Das erzeugte Zielobjekt kann ebenso wie ggf. weitere erzeugte Projektionsobjekte sowohl als ein - vorzugsweise infolge von Bedienaktionen des Fahrers - bewegliches virtuelles Objekt als auch als nur an ganz bestimmten Projektionsstellen einblendbares und somit nur "ortsdiskret verschiebbares" virtuelles Objekt ausgestaltet werden.

Wie bereits erwähnt, werden als Projektionsmittel im Sinne der Erfindung nicht angesehen konventionelle Fahrzeugscheinwerfer und Fahrzeugleuchten, die in erster Linie zur Erhellung der Umgebung des Fahrzeugs dienen oder die zu einer verbesserten Erkennbarkeit des Fahrzeugs dienen, ohne gezielt Licht an eine Projektionsstelle in der Umgebung des Fahrzeugs abzugeben. Von solchen herkömmlichen optischen Signaltechniken (z.B. auch Lichthupe, Blinker) unterscheiden sich Projektionen im Sinne der Erfindung bereits dadurch, dass die erzeugten Projektionsobjekte eine definierte zweidimensionale oder dreidimensionale Form (beispielsweise mit scharfen Kanten) besitzen, die vom Fahrzeug beabstandet erkennbar gemacht wird.

Die Erzeugung von Projektionsobjekten durch ein an einem Kraftfahrzeug vorgesehene Projektionsmittel kann erfindungsgemäß besonders vorteilhaft Anwendung finden, wenn zumindest ein Projektionsobjekt erzeugt wird, welches den für das eigene Fahrzeug benötigten Platz in einer Zielposition und/oder auf dem Weg zu dieser Zielposition markiert.

Solche Ausführungsformen der Erzeugung von Projektionsobjekten außerhalb des Kraftfahrzeugs sind besonders für Fahrmanöver nützlich, bei welchen die Abmessungen des eigenen Fahrzeuges eine entscheidende Rolle spielen, insbesondere also beim Einparken und Rangieren.

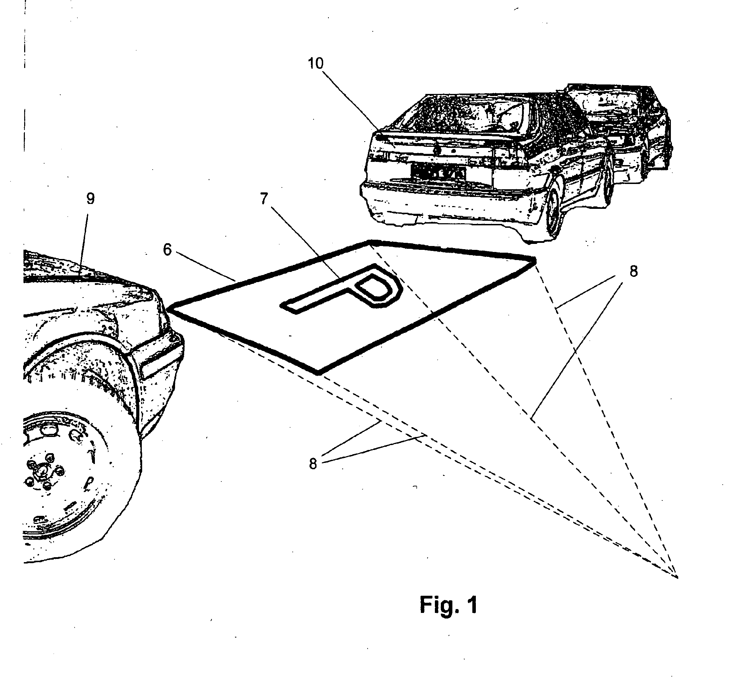

Vorzugsweise ist bei der Anwendung der Erzeugung von Projektionsobjekten außerhalb des Kraftfahrzeugs im Zusammenhang mit einem Parkmanöver zumindest ein Projektionsobjekt als Parksymbol ausgebildet bzw. beinhaltet ein solches. Ein Parksymbol zeichnet sich dadurch aus, dass dieses einen markierten Flächenbereich (oder ein markiertes Gebiet im dreidimensionalen Raum) für den Fahrer und/oder für weitere Verkehrsteilnehmer als Zielposition bei einem beabsichtigten Einparkmanöver erkennbar macht. Ein solches Parksymbol kann beispielsweise auf der Fahrbahn eingeblendet werden, vorzugsweise innerhalb eines entsprechend markierten Fahrbahnbereichs. Es kann auch räumlich "schwebend" im Raum dargestellt werden. Bevorzugt eignet sich ein Parksymbol, welches in seiner Gestaltung an ein Verkehrszeichen zur Anzeige eines Parkplatzes angelehnt ist, etwa der allgemein bekannte Buchstabe "P" dargestellt alleine oder in einem Rechteck. Fig. 1 zeigt ein Ausführungsbeispiel für die "Reservierung" eines Parkplatzes zwischen zwei anderen Kraftfahrzeugen 9 und 10 durch Kennzeichnung der Umrisse 6 des Parkplatzes und Einblendung eines Parksymbols 7 in die markierte Fläche. Die Strichlinien 8 zeigen, aus welcher Richtung das projizierende Kraftfahrzeug die erzeugten Projektionsobjekte erzeugt.

Es kann hilfreich sein, wenn solche "Projektionsstrahlen" (vgl. Strichlinien 8 in Fig. 1) auch in der realen Situation sichtbar sind. Sie können dem Fahrer des projizierenden Kraftfahrzeugs die räumliche Orientierung erleichtern. Für andere Verkehrsteilnehmer kann so eine Zuordnung eines Projektionsobjekts zu einem Kraftfahrzeug ermöglicht werden. Die "Projektionsstrahlen" 8 müssen aber nicht zwingend sichtbar ausgeführt sein, sofern die verwendete Projektionstechnik etwas anderes zulässt.

Vorzugsweise findet, insbesondere im Fall der erfindungsgemäßen Erzeugung von Projektionsobjekten bei bewegtem Kraftfahrzeug, eine vollständige oder zumindest teilweise Kompensation der Eigengeschwindigkeit und/oder Neigung des Fahrzeuges relativ zu der Fahrbahn statt. Ohne weitere Maßnahmen könnte sich ein erzeugtes Projektionsobjekt auf der Fahrbahn ungewollt bewegen, was dem Fahrer und/oder anderen Verkehrteilnehmer dessen Deutung erschweren könnte oder diese gar von der angezeigten Information ablenken könnte.

Ein Projektionsobjekt kann relativ zur Fahrbahn als Projektionsfläche aber nahezu unbeweglich erzeugt werden, wenn bei der Projektion zumindest die Eigengeschwindigkeit des Fahrzeuges relativ zu der Fahrbahn rechnerisch bestimmt und ihre Wirkung auf die Projektion kompensiert wird. Beispielsweise können hierzu die aus der DE 197 38 765 A1 an sich bekannten Maßnahmen zur Kompensation von Nick- und Rollbewegungen entsprechend Anwendung finden. So kann auch im Falle einer Erzeugung eines Projektionsobjekts mittels eines Laserstrahls auf die Fahrbahn) eine zufriedenstellende Kompensation mittels Änderung des Winkels des Laserstrahls in Abhängigkeit von der Eigengeschwindigkeit und gegebenenfalls Parametern der Längs- und Querdynamik des Fahrzeuges erreicht werden. Vor allem die Nickbewegung des projizierenden Kraftfahrzeugs kann eine bedeutsame Rolle spielen, da ein - etwa bei der Annäherung an eine Kreuzung - abbremsendes Fahrzeug sich typischerweise nach vorne neigt. Mittel zur Erfassung der Fahrzeugneigung sowie anderer physikalischer Parameter, die mit der Längs- und Querdynamik der Fahrzeuges in Zusammenhang stehen, sind in modernen Kraftfahrzeugen meist ohnehin vorgesehen.

Vorzugsweise findet die erfindungsgemäße Einblendung von Projektionsobjekten in die Umgebung des Kraftfahrzeugs in Abhängigkeit von den Ergebnissen einer sensorbasierten Analyse der Umgebung statt. Falls ein Objekt die Projektion behindert - insbesondere wenn es sich dabei um ein Lebewesen handelt, welches durch die eingesetzte Projektionstechnologie gefährdet, etwa stark geblendet werden könnte - können bestimmte Eigenschaften der Projektion (z.B. Intensität, Lichtstärke) in Abhängigkeit von den Ergebnissen der sensorbasierten Analyse der Umgebung dynamisch verändert werden oder der Projektionsprozess kann vorübergehend unterbrochen bzw. abgebrochen werden. Besonders vorteilhaft ist es, wenn in einem solchen Fall alternativ oder zusätzlich die Eigenschaften der Projektion lokal und/oder zeitlich beschränkt verändert werden. Sollte beispielsweise ein Fußgänger während eines Rangiermanövers den Strahlengang eines für die Projektion eingesetzten Laserstrahls queren, so kann die Projektion an der betreffenden Stelle räumlich selektiv und/oder zeitlich beschränkt unterbrochen bzw. in ihrer Intensität begrenzt werden.

Wenn ein geplantes Fahrmanöver aufgrund eines Hindernisses, das durch die Umgebungsanalyse erkannt wird, voraussichtlich nicht kollisionsfrei durchführbar ist, kann zur Warnung für den Fahrer und/oder für andere Verkehrsteilnehmer ein warnendes Projektionsobjekt (z.B. ein Ausrufezeichen, ggf. auch ein Ausrufezeichen in einem Warndreieck, oder ein sonstiges Warnsymbol) erzeugt werden. Eine Warnung kann alternativ oder zusätzlich auch ausgegeben werden, indem bestimmte Eigenschaften zumindest eines dargestellten Projektionsobjekts verändert werden (z.B. Farbe, schnelle Helligkeitsschwankungen, Blinken etc.).

Vorzugsweise werden im Falle der Durchführung einer sensorbasierten Analyse der Umgebung des Kraftfahrzeugs für eben diese Analyse Reflektionen von Signalen verwertet, welche von den erfindungsgemäß zur Erzeugung des zumindest einen Projektionsobjekts eingesetzten Projektionsmitteln herrühren und an Objekten in der Umgebung reflektiert werden. Aus dem Stand der Technik sind verschiedene Verfahren zur Analyse der Umgebung bekannt, bei welchen die Umgebung entweder mit einem beispielsweise als Infrarot-Laser ausgeführten Laser abgetastet oder mit einem beispielsweise gitterförmig ausgestalteten Lichtmuster beleuchtet wird. Anhand der sich dabei ergebenden Reflektionen aus der Umgebung, kann die Umgebung analysiert und beispielsweise als eine räumliche bzw. so genannte 2,5-dimensionale Karte erfasst werden. Dabei können beispielsweise so genannte "time-of-flight"-Technologien Anwendung finden.

Die so durchgeführte Analyse der Umgebung kann etwa eine Detektion von Hindernissen betreffen und/oder zur Bestimmung eines Verlaufs, insbesondere einer Krümmung, der Fahrbahnoberfläche oder einer Offroad-Umgebüng dienen. Eine eventuell detektierte Krümmung der Fahrbahnoberfläche kann bei der erfindungsgemäßen Erzeugung von Projektionsobjekten insofern Berücksichtigung finden, als im Falle einer Projektion auf die Fahrbahn die Projektionsstelle geeignet gewählt wird und/oder Verzerrungen infolge von Unebenheiten der Fahrbahn kompensiert werden. Dies führt insbesondere bei Erzeugung des zumindest einen Projektionsobjekts mittels eines oder mehrerer Laserstrahlen zu verbesserten Ergebnissen.

Wird eine laserbasierte Vorrichtung zur Analyse der Umgebung des Kraftfahrzeugs eingesetzt (beispielsweise auch zur allgemeinen Gefahrenerkennung und/oder Kollisionsvermeidung), so kann es besonders vorteilhaft sein, wenn ein Laser derselben Vorrichtung auch für das erfindungsgemäße Verfahren mitverwendet wird. Es kann somit der bei dem Kraftfahrzeug beanspruchte Bauraum verringert werden. Zudem können Kosten gespart werden.

Besonders einfach kann die für die Erfindung erforderliche Erzeugung von Projektionsobjekten außerhalb des Kraftfahrzeugs umgesetzt werden, wenn als Projektionsmittel zumindest ein lenkbar beweglicher Laser dient oder wenn ein Spiegel, über den ein Laser umgelenkt wird, lenkbar beweglich ausgeführt ist. Beispielsweise kann die Richtung eines Laserstrahls gesteuert werden, indem der Laserstrahl über einen Spiegel umgelenkt wird, der durch einen beispielsweise elektromagnetisch ausgeführten oder auf der Piezo-Technologie beruhenden Antrieb schwenkbar ausgeführt ist. Bei dieser einfachen aber funktionalen Ausprägung eines Systems zur Erzeugung von Projektionsobjekten außerhalb des Kraftfahrzeugs wird in der menschlichen Wahrnehmung eines Beobachters durch eine schnelle. Bewegung eines oder mehrerer Laserstrahlen der visuelle Eindruck eines Objekts erzeugt. So lassen sich auch virtuelle Objekte projizieren, die als dreidimensionale räumliche Formen interpretierbar sind. Zur Verleihung einer räumlichen Wirkung können Projektionsobjekte beispielsweise unterschiedliche. Linienstärken, Farben und eine "perspektivische" Ausgestaltung aufweisen.

Vorzugsweise ist zumindest ein erzeugtes Projektionsobjekt, insbesondere das Zielobjekt eines Fahrmanövers, so gestaltet, dass seine Verkörperung in der Umgebung zumindest teilweise deutlich nach oben über die Fahrbahnebene hinausragt und ein dreidimensionales Objekt darstellt bzw. als solches wahrnehmbar ist. Dadurch wird eine räumliche Wahrnehmung begünstigt und es ergibt sich der Vorteil einer verbesserten Erkennbarkeit - insbesondere aus großer Distanz. So kann das zumindest eine Projektionsobjekt mit höherer Wahrscheinlichkeit auch dann von einem anderen Verkehrsteilnehmer gesehen werden, wenn dieser seinen Blick nicht unmittelbar auf die Fahrbahn richtet.

Wie bereits an früherer Stelle ausgeführt wurde, kann es für die Umsetzung der Erfindung ganz besonders vorteilhaft sein, Techniken anzuwenden, die eine Erzeugung von Projektionsobjekten zulassen, welche nicht nur dreidimensional wahrnehmbar sind, sondern an sich eine dreidimensionale Form besitzen. Hierzu können - wie an früherer Stelle beschrieben - unter Ausnutzung des physikalischen Effekts der Defraktion beispielsweise auch ohne eine feste Projektionsfläche in der Umgebung des Fahrzeuges mittels kohärenter Lichtquellen, die am Kraftfahrzeug angeordnet sind, sekundäre Lichtquellen erzeugt werden. In entsprechender Anzahl und räumlicher Anordnung können solche sekundäre Lichtquellen, die auch räumlich ausgedehnt sein können, bei einem Betrachter zur Wahrnehmung als Projektionsobjekt im Sinne der Erfindung führen. Möglichkeiten der technischen Realisierung einer solchen Erzeugung sekundärer Lichtquellen wurden bereits an früherer Stelle angegeben. Etwa kann eine holographische Projektion unter Nutzung kontrollierter Interferenz kohärenter Lichtquellen auf einer Ultraschallwellenfront Anwendung finden.

Durch den rasanten Fortschritt der Entwicklungen auf diesem Gebiet wird auch eine zunehmend verbesserte Entkopplung der Projektion von den Eigenschaften des Mediums, in welches projiziert wird, erreicht. Auf die Erzeugung eines geeigneten Mediums, etwa einer Ultraschallwellenfront, welche grundsätzlich auch durch das projizierende Kraftfahrzeug erfolgen kann, kann somit zukünftig möglicherweise verzichtet werden.

Die auf solche Art und Weise erzeugbaren "im Raum schwebenden" und/oder frei positionierbaren Objekte besitzen den Vorteil guter Erkennbarkeit auch in Situationen, in welchen eine Projektion etwa auf der Fahrbahnoberfläche schlecht erkennbar wäre. Ferner wirken solche Projektionsobjekte in der Regel äußerst realitätsnah. Außerdem sind durch Holographie erzeugte Projektionsobjekte im Gegensatz zu "normalen" 3D-Bildern unabhängig von der Position des Betrachters nahezu aus allen Richtungen als räumliche Objekte betrachtbar.

Je nach Projektionstechnik können Projektionsobjekte erzeugt werden, die für das menschliche Auge sichtbar sind und/oder solche, die für das menschliche Auge nicht sichtbar sind. Durch Verwendung unterschiedlicher Techniken können auch Teile der Gesamtdarstellung für das menschliche Auge sichtbar erzeugt werden, während ändere Teile der Gesamtdarstellung für das menschliche Auge unsichtbar erzeugt werden.

Beispielsweise kann ein Projektionsobjekt oder ein Teil eines solchen durch Projektion im infraroten oder ultravioletten Spektralbereich erzeugt werden. Für einen menschlichen Beobachter ist es dann nur unter Verwendung einer Hilfseinrichtung, etwa eines Infrarot-Kamerasystems oder anderer optischer Hilfsmittel, sichtbar.

Daraus kann sich der Vorteil ergeben, dass die Umgebung aus der Sicht anderer Verkehrsteilnehmer nicht mit überflüssigen Projektionsobjekten "belastet" wird. Solche überflüssigen Projektionsobjekte könnten die übrige Verkehrsteilnehmer irritieren oder anderweitig stören. Für den Fahrer hingegen können detaillierte Hilfsinformationen wünschenswert sein. Deshalb können solche Hilfsinformationen beispielsweise derart projiziert werden, dass sie nur mittels einer Fahrerassistenzkamera und zugehöriger Anzeigemittel für den Fahrer des projizierenden Kraftfahrzeugs sichtbar gemacht werden. Gleichzeitig kann ein anderes Projektionsobjekt, beispielsweise ein Zielobjekt für ein Fahrmanöver, in solcher Art und Weise erzeugt werden, dass es für alle Verkehrsteilnehmer sichtbar ist.

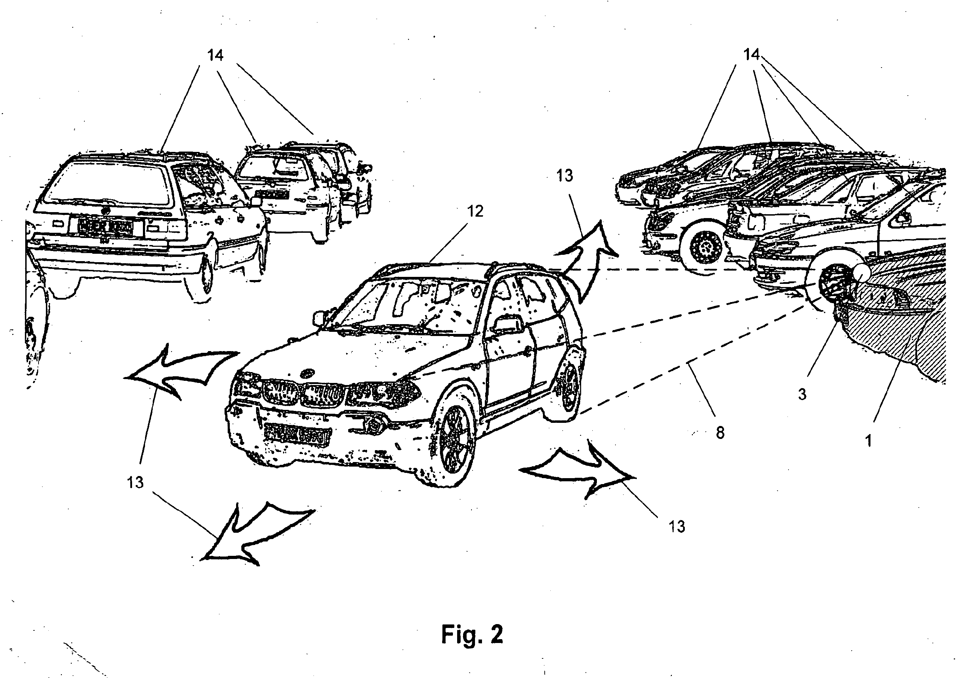

Fig. 2 zeigt eine Umgebungsszene, in welcher ein Kraftfahrzeug 1 durch Projektionsmittel 3 ein Zielobjekt 12 für ein Fahrmanöver erzeugt. Das Zielobjekt 12 ist als dreidimensionales virtuelles Abbild des Kraftfahrzeugs 1 ausgebildet und ist für alle Verkehrsteilnehmer (ohne optische Hilfsmittel) sichtbar. Das Zielobjekt 12 ist teiltransparent, wodurch (unter anderem) auch für andere Verkehrsteilnehmer seine virtuelle Natur erkennbar ist. Durch die "Projektionsstrahlen" 8 ist - insbesondere zur Vermeidung von Irritationen anderer Verkehrsteilnehmer - erkennbar, durch welche Projektionsquelle (d.h. von welchem Kraftfahrzeug) das Projektionsobjekt projiziert wird (bspw. aus welchem Fahrzeug). Somit ist das Bewegungsvorhaben, mit dem die Erzeugung eines solchen Zielobjekts gemäß einer bevorzugten Ausführungsform der vorliegenden Erfindung einhergeht, auch für andere Verkehrsteilnehmer dem Kraftfahrzeug 1 zuordenbar.

Um das Zielobjekt in eine geeignete Position gegenüber den umliegend abgestellten oder fahrenden Kraftfahrzeugen 14 zu bringen, kann der Fahrer des Kraftfahrzeugs die Position des Zielobjekts in der Umgebung mittels eines Bedienelements verschieben. Die Hilfspfeile 13 zeigen ihm dabei mögliche Bewegungsrichtungen an. Erst wenn das Zielobjekt sich in einer geeigneten Position befindet, wählt der Fahrer des Kraftfahrzeugs 1 diese Position als Sollposition für das Ende seines Fahrmanövers aus. Erst dann wird das Fahrmanöver (im vorliegenden Fall vollautomatisch) von dem Kraftfahrzeug 1 ausgeführt. Am Ende des Fahrmanövers wird das Kraftfahrzeug 1 sich in der ausgewählten Sollposition befinden.

Das Verschieben des Zielobjekts 12 und die anschließende Auswahl einer Zielposition des Zielobjekts 12 als Sollposition kann der Fahrer des projizierenden Kraftfahrzeugs 1 durch ein - hier als Dreh-/Druckknopf ausgebildetes, jedoch nicht bildlich dargestelltes - Bedienelement im Kraftfahrzeuginneren vornehmen. Weitere Einzelheiten zur Gestaltung des Bedienvorgangs sind in analoger Weise der deutschen Patentanmeldung der Anmelderin mit dem Aktenzeichen 102006026092.9 zu entnehmen.

Die Hilfspfeile 13 sind - anders als das Zielobjekt 12 - nicht (ohne optische Hilfsmittel) für andere Verkehrsteilnehmer sichtbar, da sie mittels eines Lasers im Infrarotspektrum erzeugt werden. Für den Fahrer des Kraftfahrzeugs 1 sind die Hilfspfeile 13 jedoch unter Verwendung der folgenden Hilfsmittel und Verfahren sichtbar. Um die Hilfspfeile 13 für den Fahrer sichtbar zu machen, wird die Umgebungsszene durch eine bei dem Kraftfahrzeug 1 angeordnete Infrarotkamera aufgenommen. In einer nachfolgenden Bildverarbeitung werden Projektionsobjekte, die durch Licht im Infrarotspektrum erzeugt sind, extrahiert. Ein Abbild der extrahierten Projektionsobjekte (hier der Hilfspfeile 13) wird durch ein Head-Up-Display so in die Windschutzscheibe des Kraftfahrzeugs 1 eingeblendet, dass die Hilfspfeile 13 aus Sicht des Fahrers positionsrichtig der Umgebungsszene überlagert erscheinen. Durch andere Techniken - etwa unter Verwendung von Polarisationsfiltern - könnten die Hilfspfeile 13 (dann in entsprechend veränderter Art und Weise projiziert) auch ohne zwischengeschaltete Aufnahme und Wiedergabe für den Fahrer sichtbar gemacht werden.

Für die Betrachtung des erfindungsgemäß erzeugten zumindest einen Projektionsobjekts durch den Fahrer oder andere Fahrzeuginsassen kann die Windschutzscheibe des projizierenden Fahrzeugs als optisches Hilfsmittel genutzt werden. Diese kann hierzu mit speziellen Polarisationseigenschaften ausgestaltet sein. So können bei geeigneter stereoskopischer Projektion Projektionsobjekte erzeugt werden, die durch die Fahrzeugsinsassen dreidimensional wahrnehmbar sind (beispielsweise nach dem in IMAX-Kinos verwendeten Prinzip oder ähnlichen Verfahren). Eine solche Windschutzscheibe kann auch die optischen Hilfsmittel aufweisen oder selbst die optischen Hilfsmittel verkörpern, durch welche Projektionsobjekte, die für andere Verkehrsteilnehmer im Wesentlichen unsichtbar oder zumindest schwer erkennbar sind, für den Fahrer des projizierenden Kraftfahrzeugs sichtbar gemacht werden.

Bei der Erfindung wird in der Umgebung des Kraftfahrzeugs ein Zielobjekt erzeugt, welches die Zielposition eines Fahrmanövers markiert. Zur Veränderung der Zielposition kann es vorteilhaft sein, wenn dieses Zielobjekt unter Nutzung von Bedienelementen des Kraftfahrzeuges nur in Entsprechung zu rechnerisch simulierten physikalischen Bewegungsgesetzen, die dem Kraftfahrzeug eigen sind, bewegt werden kann. Unter Bewegung eines Zielobjekts wird dabei eine solche Veränderung der Projektion verstanden, bei der ein Eindruck einer Bewegung entsteht oder beispielsweise nur symbolisiert wird. Letzteres kann auch mittels diskreter Ein-und Ausblendung des Zielobjekts an veränderten Positionen erfolgen. Eine Bewegung des Zielobjekts kann beispielsweise bestehen in einer fließenden Verschiebung oder in einer ortsdiskreten Veränderung der Position des Zielobjekts und kann - je nach Ausführungsform - durch den Fahrer gesteuert werden oder automatisiert bzw. teilautomatisiert erfolgen. Solche Veränderungen bzw. Verschiebungen können in Entsprechung zu den physikalischen Bewegungsgesetzen des Kraftfahrzeuges in seiner Umgebung eingeschränkt werden. Ein Vorteil einer solchen Ausführungsform der Erfindung liegt darin, dass die Durchführbarkeit eines Manövers, einschließlich physikalischer Einschränkungen, die jedem Fahrzeug eigen sind, beispielsweise eines bestimmten minimalen Wendekreises und/oder anderer Fahrwerksparameter, vor dem eigentlichen Manöver - beispielsweise einem Einparkmanöver - geprüft werden kann.

## Patentansprüche

1. Verfahren zur Steuerung eines zumindest teilautomatisch durchführbaren Fahrmanövers, durch welches ein Kraftfahrzeug (1) von einer Istposition in eine Sollposition verbringbar ist, mit den Schritten:
- in der Umgebung des Kraftfahrzeugs wird durch Projektion mittels an dem Kraftfahrzeug vorgesehener Projektionsmittel (3) ein virtuelles Zielobjekt (12) an einer Zielposition für das Kraftfahrzeug in der Umgebung des Kraftfahrzeugs erzeugt,
- in Abhängigkeit von Bedienaktionen eines Bedieners des Kraftfahrzeugs wird die Zielposition verändert, wodurch auch das Zielobjekt in der Umgebung des Kraftfahrzeugs verschoben wird,
- durch eine Auswahlaktion des Bedieners wird die veränderte Zielposition ausgewählt und als Sollposition des Fahrmanövers übernommen.

2. Verfahren nach Anspruch 1, **dadurch gekennzeichnet,**
**dass** das Zielobjekt eine avisierte Endposition des Fahrmanövers markiert.

3. Verfahren nach einem der Ansprüche 1 oder 2, **dadurch gekennzeichnet,**
**dass** das Fahrmanöver ein Einparkmanöver ist und
**dass** das Zielobjekt eine avisierte Parkposition markiert.

4. Verfahren nach einem der Ansprüche 1 bis 3, **dadurch gekennzeichnet,**
**dass** das virtuelle Zielobjekt zumindest flächig ausgebildet ist.

5. Verfahren nach einem der Ansprüche 1 bis 4, **dadurch gekennzeichnet,**
**dass** das virtuelle Zielobjekt dreidimensional ausgebildet ist.

6. Verfahren nach einem der Ansprüche 1 bis 5, **dadurch gekennzeichnet,**
**dass** die Erzeugung des Zielobjekts so erfolgt, dass das Zielobjekt für andere Verkehrsteilnehmer ohne optische Hilfsmittel im Wesentlichen unsichtbar ist, und dass das Zielobjekt für den Fahrer des Kraftfahrzeugs durch optische Hilfsmittel sichtbar gemacht wird.

7. Verfahren nach einem der Ansprüche 1 bis 6, **dadurch gekennzeichnet,**
**dass** mittels der Projektionsmittel ferner zumindest ein zur Fahrerinformation dienendes Hilfsobjekt (13) erzeugt wird,
**dass** die Erzeugung des zumindest einen Hilfsobjekts so erfolgt, dass das zumindest eine Hilfsobjekt für andere Verkehrsteilnehmer ohne optische Hilfsmittel im Wesentlichen unsichtbar ist, und
**dass** das zumindest eine für andere Verkehrsteilnehmer im Wesentlichen unsichtbare Hilfsobjekt für den Fahrer des Kraftfahrzeugs durch optische Hilfsmittel sichtbar gemacht wird.

8. Verfahren nach einem der Ansprüche 1 bis 7, **dadurch gekennzeichnet,**
**dass** zumindest einmalig eine automatische Interpretation der Umgebung des einzuparkenden Kraftfahrzeugs durchgeführt wird, um zumindest eine zulässige und/oder bevorzugte Zielposition zu bestimmen.

9. Verfahren nach Anspruch 8, **dadurch gekennzeichnet,**
**dass** durch die automatische Interpretation der Umgebung eine erste und eine zweite Zielposition bestimmt werden und dass das Zielobjekt durch eine Bedienaktion von der ersten Zielposition zu der zweiten Zielposition verschoben wird.

10. Verfahren nach einem der Ansprüche 1 bis 9, **dadurch gekennzeichnet,**
**dass** das Zielobjekt so gestaltet ist, dass es in der Umgebung ein virtuelles Kraftfahrzeug verkörpert.

11. Verfahren nach einem der Ansprüche 1 bis 10, **dadurch gekennzeichnet,**
**dass** in der Umgebung des Kraftfahrzeugs durch Projektion mittels der an dem Kraftfahrzeug vorgesehenen Projektionsmittel eine zur aktuell eingestellten Zielposition führende Trajektorie und/oder ein erforderlicher Rangierraum kenntlich gemacht wird.

12. Verfahren nach Anspruch 11, **dadurch gekennzeichnet,**
**dass** dem Fahrer des Kraftfahrzeugs die Möglichkeit gegeben wird, zwischen mehreren möglichen Trajektorien zu einer einzigen Zielposition auszuwählen.

## Claims

1. A method of controlling a driving manoeuvre which can be performed at least partially automatically, by means of which a motor vehicle (1) can be brought from an actual position into a desired position, including the steps:
- a virtual target object (12) is generated by projection in the area around the motor vehicle using projection means (3) provided on the motor vehicle, at a target position for the motor vehicle in the area around the motor vehicle,
- the target position is altered in dependence upon operational actions by an operator of the motor vehicle, as a result of which the target object in the area around the motor vehicle is also displaced,
- the altered target position is selected by a selective action of the operator and is adopted as desired position of the driving manoeuvre.

2. A method according to claim 1, **characterised in that** the target object marks an intended end position of the driving manoeuvre.

3. A method according to one of claims 1 or 2, **characterised in that** the driving manoeuvre is a parking manoeuvre and **in that** the target object marks an intended parking position.

4. A method according to one of claims 1 to 3, **characterised in that** the virtual target object has an at least planar construction.

5. A method according to one of claims 1 to 4, **characterised in that** the virtual target object has a three-dimensional construction.

6. A method according to one of claims 1 to 5, **characterised in that** the target object is generated in such a way that the target object is essentially invisible to other road users without optical aids, and that the target object is made visible to the driver of the motor vehicle by optical aids.

7. A method according to one of claims 1 to 6, **characterised in that** at least one auxiliary object (13) serving to provide information to the driver is also generated by the projection means,
**in that** the at least one auxiliary object is generated in such a way that it is essentially invisible to other road users without optical aids, and
**in that** the at least one auxiliary object which is essentially invisible to other road users is made visible to the driver of the motor vehicle by optical aids.

8. A method according to one of claims 1 to 7, **characterised in that** an automatic interpretation of the area around the motor vehicle to be parked is performed at least once in order to determine at least one permissible and/or preferred target position.

9. A method according to claim 8, **characterised in that** a first and a second target position are determined by the automatic interpretation of the area around the vehicle and that the target object is displaced from the first target position to the second target position by an operating action.

10. A method according to one of claims 1 to 9, **characterised in that** the target
object is configured to represent a virtual motor vehicle in the area around the motor vehicle.

11. A method according to one of claims 1 to 10, **characterised in that** a trajectory leading to the target position currently set and/or a required manoeuvring space in the area around the motor vehicle is marked by projection using the projection means provided on the motor vehicle.

12. A method according to claim 11, **characterised in that** the driver of the motor vehicle is given the option of choosing between several possible trajectories to a single target position.

## Revendications

1. Procédé de commande d'une manoeuvre de conduite qui s'exécute au moins partiellement de manière automatique pour passer un véhicule (1) d'une position réelle à une position de consigne comprenant les étapes suivantes consistant à :
- par projection de moyen de projection (3) prévus sur le véhicule, générer dans l'environnement du véhicule un objet-cible virtuel (12) sur une position cible du véhicule dans l'environnement du véhicule,
- en fonction des actions de manoeuvre de l'utilisateur du véhicule, modifier la position cible, ce qui déplace également l'objet-cible dans l'environnement du véhicule, et
- par une action de sélection faite par l'utilisateur, sélectionner la position cible modifiée et la prendre comme position de consigne pour la manoeuvre de conduite.

2. Procédé selon la revendication 1,
**caractérisé en ce que**
l'objet-cible marque la position finale projetée de la manoeuvre de conduite.

3. Procédé selon l'une des revendications 1 ou 2,
**caractérisé en ce que**
la manoeuvre de conduite est une manoeuvre de rangement dans une place de stationnement et l'objet-cible est la position de stationnement envisagée.

4. Procédé selon l'une des revendications 1 à 3,
**caractérisé en ce que**
l'objet-cible virtuel est réalisé au moins comme une surface.

5. Procédé selon l'une des revendications 1 à 4,
**caractérisé en ce que**
l'objet-cible virtuel est présenté en trois dimensions.

6. Procédé selon l'une des revendications 1 à 5,
**caractérisé en ce que**
on génère l'objet-cible de façon qu'il soit pratiquement invisible pour les autres participants à la circulation, sans moyens optiques auxiliaires et que l'objet-cible soit rendu visible pour le conducteur du véhicule par des moyens optiques auxiliaires.

7. Procédé selon l'une des revendications 1 à 6,
**caractérisé en ce que**
le moyen de projection génère en outre au moins un objet auxiliaire (13) servant à l'information du conducteur,
- la génération d'au moins un objet auxiliaire est telle que cet objet auxiliaire est pratiquement invisible pour d'autres participants à la circulation non équipés de moyens optiques auxiliaires, et
- l'objet auxiliaire essentiellement invisible pour les autres participants à la circulation est rendu visible pour le conducteur du véhicule par des moyens optiques auxiliaires.

8. Procédé selon l'une des revendications 1 à 7,
**caractérisé en ce qu'**
au moins une fois une interprétation automatique de l'environnement du véhicule que l'on veut stationner est faite pour déterminer au moins une position-cible autorisée et/ou préférentielle.

9. Procédé selon la revendication 8,
**caractérisé en ce que**
l'interprétation automatique de l'environnement détermine une première et une seconde position-cible et l'objet-cible est déplacé de la première position-cible à la seconde position-cible par une action de service.

10. Procédé selon l'une des revendications 1 à 9,
**caractérisé en ce que**
l'objet-cible est conçu pour constituer un véhicule virtuel dans l'environnement.

11. Procédé selon l'une des revendications 1 à 10,
**caractérisé en ce que**
on rend visible une trajectoire conduisant à la position-cible réglée actuellement et/ou un espace de rangement nécessaire dans l'environnement du véhicule, par projection à l'aide de moyen de projection équipant le véhicule.

12. Procédé selon la revendication 11,
**caractérisé en ce qu'**
on donne au conducteur du véhicule la possibilité de choisir entre plusieurs trajectoires vers une seule position cible.
